# EUROPEAN PATENT SPECIFICATION

(11) **EP 2 686 702 B1**
(45) Date of publication and mention of the grant of the patent: **18.10.2017**
(21) Application number: 12757736.9
(22) Date of filing: 06.03.2012
(51) Int. Cl.: G01S 13/93, B60W 30/08, B60W 40/10, B60W 30/09, B60W 30/095, G01S 17/93, G01S 13/72

(54) **A DEVICE AND A METHOD FOR ESTIMATING PARAMETERS RELATING TO VEHICLES IN FRONT**
VORRICHTUNG UND VERFAHREN ZUR SCHÄTZUNG VON PARAMETERN MIT BEZUG AUF VORAUSFAHRENDE FAHRZEUGE
DISPOSITIF ET PROCÉDÉ POUR ESTIMER DES PARAMÈTRES RELATIFS À DES VÉHICULES SITUÉS DEVANT

(30) Priority: 14.03.2011 SE 1150219
(43) Date of publication of application: 22.01.2014
(73) Proprietor: Scania CV AB, 151 87 Södertälje (SE)
(72) Inventor: DEGERMAN, Pär, S-613 36 Oxelösund (SE); ANDERSSON, Lars, S-582 32 Linköping (SE)
(74) Representative: Scania CV AB
(86) International application number: PCT/SE2012/050249
(87) International publication number: WO 2012/125106

(56) References cited:
- JP-A- 2005 178 622
- US-A1- 2003 156 015
- US-A1- 2003 156 015
- US-A1- 2006 162 985
- US-A1- 2009 040 095
- US-A1- 2009 040 095
- US-B1- 6 311 123
- US-B1- 6 311 123
- US-B1- 6 691 018
- US-B1- 7 365 769
- US-B1- 7 365 769

## Description

### Field of the invention

The present invention comprises a device and a method pertaining to a vehicle, in particular a powered road vehicle, for estimation of parameters relating to objects in front, particularly vehicles in front. The estimation is done by means of advanced signal processing and calculations based on data from cameras, lasers and/or radar.

### Background to the invention

Various types of electronic control systems are now usual in powered land vehicles. Control systems are to be found in, for example, automatic gearboxes, cruise controls or other types of safety systems. The control systems usually have a number of input data for performing their task. Input data may be vehicle-specific parameters such as engine speed, vehicle speed or fuel consumption, but may also be specific to surroundings, e.g. topology, imposed speed limits or distance from vehicles in front.

For control systems which operate with input data from the vehicle's surroundings to work satisfactorily, it is of course desirable that they receive input data which describe those surroundings as exactly as possible. Many improvements have been made in this field. Examples of input data which describe the surroundings and may be given to control systems are information from alarm centres about an accident having occurred, information from traffic centres about traffic queues or roadworks etc. or information from other vehicles via so-called V2V (vehicle to vehicle) communication.

US 6420996 B1 describes a method and device for predicting collisions between vehicles with the object of preventing or mitigating the consequences of a collision, on the supposition that the two vehicles concerned are equipped with both sensors and transponders.

EP 1316480 B1 also describes a collision-preventing safety system, with lidar (light detection and ranging) sensors or radar sensors whereby the safety system can be activated when a collision with another vehicle is imminent. The sensor measures the other vehicle's position, speed and acceleration.

JP 2005 178622 A describes a method for preventing a following vehicle colliding with a preceding vehicle, wherein the preceding vehicle relative distance, velocity, and forecast travel direction trajectory are detected in order to determine if the preceding vehicle is skidding. If the preceding vehicle is skidding a safety control system is activated in the following vehicle order to prevent collision.

The object of the present invention is to propose an improved device and method for estimation of parameters relating to objects in front, particularly vehicles in front, with the object of causing the vehicle's existing safety systems to achieve greater traffic safety.

### Summary of the invention

The above object is achieved with the invention defined by the independent claims. Preferred embodiments are defined by the dependent claims.

The invention thus comprises a device pertaining to a vehicle and a method for estimation of parameters relating to objects in front, particularly vehicles in front. The device according to the present invention comprises at least one sensor element which is a camera for gathering data from a region in front and sending them to a calculation unit which has a signal connection to one or more safety systems situated in the vehicle. The calculation unit is adapted to calculating at least one parameter for the vehicle within the front region and to sending an output signal based on that calculation to one or more safety systems of the vehicle, when any of the parameters exceeds a predetermined limit value. One or more of the safety systems of the vehicle are activated upon detection of skidding of the vehicle in front. Said at least one parameter is at least one of the parameters angular velocity and angular acceleration and the calculation unit detects the occurrence of skidding of the vehicle in front if said sensor element registers its brake lamp lighting up without any brake action by the vehicle in front being registered by the calculation unit.

A disadvantage of previous known devices is that they only give some of the parameters from vehicles in front. The result is too simple a model of a vehicle's surroundings, and the scope for the vehicle's control systems becomes limited. Equipping the vehicle with sensors in the form of cameras, lasers and/or radar makes it possible, however, to extract more information from the vehicle's surroundings. However, extracting information about the behaviour of vehicles in front entails a novel type of processing of the information received from the sensors, as described in more detail in the detailed part of the description below. The invention is particularly suited to estimating the behaviour of vehicles in front travelling in the same direction as the vehicle which is provided with the device according to the invention.

### Brief description of drawings

Figure 1 depicts a vehicle (100) according to the present invention as seen from above.
Figure 2 shows how information from a vehicle in front (105) travelling in the same direction as the vehicle (100) is gathered by a sensor element (101) at a time t=t₁.
Figure 3 shows how information from a vehicle in front (105), which in this case is skidding, is gathered by the sensor element (101) at a time t=t₂.
Figure 4 depicts a method according to the present invention.

### Detailed description of preferred embodiments of the invention

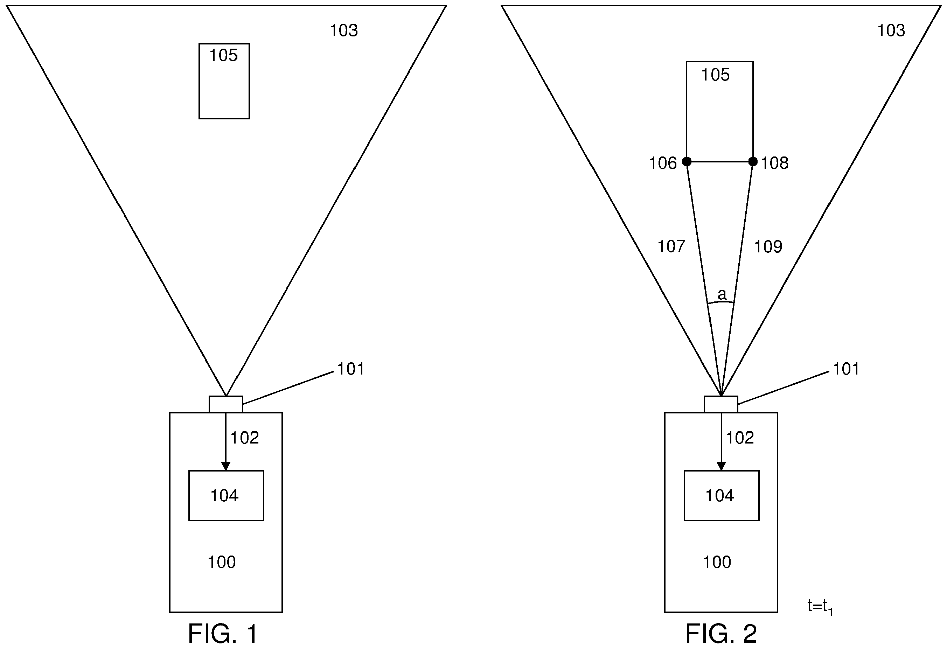

The invention is described in more detail below with reference to Figures 1-4.

**Figure 1** depicts schematically a vehicle (100) as seen from above. The vehicle (100) has at least one sensor element (101) which is a camera fastened to its forward portion. The sensor element (101) may be one or more in number, the further sensor elements being in the form of cameras, lasers and/or radar. The sensor element (101) gathers data (102) from a surrounding region (103), here illustrated as a triangular sector in front of the vehicle (100), and sends them, preferably via lines, to a calculation unit (104) which does processing of incoming data (102), e.g. by filtering and interpolation. The region in front (103) may comprise one or more objects (105) or none at all. The object in front (105) may be a vehicle, but other types of objects, e.g. cargo shed by a vehicle in front, or a moving human being in the region in front, may also be detected.

**Figure 2** depicts examples of data which may be gathered at a time t=t₁ from a situation illustrated in which the object is a vehicle in front (105) travelling in the same direction as the host vehicle (100). In this case the sensor element (101) and the calculation unit (104) have been able to discern the two rear corners (106,108) of the vehicle in front (105), and vectors (107,109) from the sensor element (101) to the corners (106,108) have been registered. As the calculation unit (104) thus has information about an angle (a) between the vectors (107,109) and the distance to the rear corners (106,108) of the vehicle in front (105), the angle of the vehicle in front (105) relative to the host vehicle (100) may be calculated by the calculation unit (104) by trigonometric calculations. The sensor element (101) and the calculation unit (104) may also register the cross-sectional area and shape of the rear portion of the vehicle in front (105), the sensor element (101) being a camera. This presupposes that with the help of the calculation unit (104) the sensor element (101) registers information from three dimensions, i.e. including in the height direction.

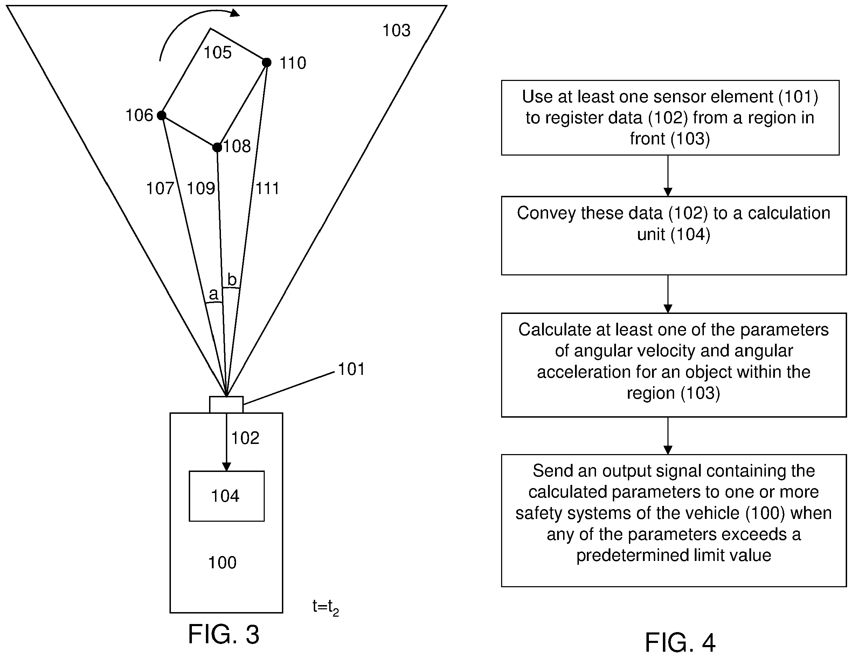

**Figure 3** depicts the situation from Figure 2 but at a time t=t₂, where t₂>t₁ and the vehicle in front (105) is now skidding. The sampling rate for data gathering by the sensor element (101) may be varied. A possible sampling rate is 100 kHz. A higher sampling rate would result in greater accuracy but also require more processor capacity of the calculation unit (104). Here the vectors (107,109) have changed relative to time t=t₁, and a new vector (111) has been registered with respect to the forward right corner (110) of the vehicle in front (105). The calculation unit (104) is thus able to calculate relative and absolute positions, speed, acceleration, angle, angular velocity and angular acceleration for the vehicle in front (105). The calculation unit (104) registers that the vehicle in front (105) has suddenly acquired an angular velocity greater than zero while at the same time having a velocity straight ahead, and therefore draws the conclusion that a skid has occurred. The calculation unit (104) can then send a signal to the ESP (electronic stability programme) system and/or other safety systems to prepare for activation.

Examples of other occurrences which the present invention similarly makes it possible to detect from vehicles in front (105) are transverse braking or a sharp swerve to avoid animals or the like. These potentially hazardous situations may also in the same way be registered and generate activation of the safety systems of the vehicle (100).

The limit values which may be used for detection of skidding of the vehicle in front (105) are related to
- angular velocity or angular acceleration relative to the speed of the vehicle in front (105), and may for example be related to
- change in the angular acceleration of the vehicle in front (105),
- covariance matrices for the angular acceleration, and/or
- lateral velocity of the vehicle in front (105) relative to its longitudinal velocity.
Other more obvious limit values which may be implemented in the device or the method for activation of the vehicle's safety systems according to the present invention might be
- the vehicle in front (105) having a low speed relative to the host vehicle (100), and/or
- the vehicle in front (105) having an opposite speed relative to the host vehicle (100).

In the situation depicted in Figure 3, the calculation unit (104) may also calculate the cross-sectional area of the right side of the vehicle in front (105) and hence make an approximate estimate of that vehicle's volume when the cross-sectional area of its rear side has already been registered at time t=t₁. Information about the weight of the vehicle in front (105) may then be estimated, e.g. by consulting look-up tables or by standard weight per unit volume. As the vehicle in front (105) has in this case skidded and the calculation unit (104) thus has information about its acceleration and estimated weight, it is possible to calculate a friction coefficient for the running surface on which it is travelling. This calculation may involve using Newton's second law which describes the relationship between the resultant force, weight and acceleration of the vehicle in front (105). Newton's second law may be expressed as F=m*a, in which F is the resultant force, m the weight and a the acceleration. This calculation may also be done other way round, i.e. if the vehicle has information about a friction coefficient for the running surface, the weight of the vehicle in front may be estimated when skidding is detected.

**Figure 4** depicts a method according to the present invention. As step 1, information is registered from the region (103) in front of the vehicle (100) by means of at least one sensor element (101). The sensor element (101) is a camera fastened to the vehicle (100). As step 2, these data (102) are passed on to a calculation unit (104) which may for example take the form of a microprocessor of a known kind.

As step 3, the calculation unit (104) calculates parameters pertaining to one or more vehicles in front (105). The parameters include at least one of an angular velocity and angular acceleration and may be one or more from among relative and absolute positions, speed, acceleration, angle, angular velocity and angular acceleration of the vehicle in front (105). A friction coefficient for the running surface on which it is travelling may also be calculated by first estimating its volume and weight and then calculating its acceleration as described above in relation to Figure 3.

As step 4, an output signal containing the calculated parameters about the vehicle in front (105) is sent to the safety system of the vehicle (100) when any of the parameters exceeds a predetermined limit value. One or more of the safety systems of the vehicle (100) are activated upon detection of skidding of the vehicle in front (105). For example, information about detected skidding of a vehicle in front (105) may be sent to the ESP system for activation. An occurrence of skidding of the vehicle in front (105) is detected if the camera (101) registers its brake lamp lighting up without any brake action by the vehicle in front (105) being registered.

The sensor element (101) being a camera, with image processing, various different logics may be implemented in the calculation unit (104). Skidding of the vehicle in front (105) is detected if the camera and the calculation unit (104) register its brake lamp lighting up without any appreciable brake action being registered. Another way of detecting skidding of the vehicle in front (105) is if it has rotated through a certain angle but still has a speed vector in the same direction of movement as the host vehicle (100). A vehicle (100) according to the present invention may further be equipped with other communication equipment for disseminating the calculated information to other vehicles, alarm centres or the like.

Absolute speed of the vehicle in front (105) means its velocity relative to a fixed point, e.g. the running surface on which it is travelling. Relative speed means the relative velocity between the vehicle in front (105) observed and the host vehicle (100). As the calculation unit (104) also has information about the parameters of the host vehicle (100), it can convert a measured relative speed to an absolute speed, and so on. Similar reasoning applies to the position, acceleration, angle, angular velocity and angular acceleration of the vehicle in front (105). For example, relative angular velocity may be regarded as more relevant than the absolute angular velocity on bends, since both vehicles (100, 105) will already have a given angular velocity when negotiating a bend.

The above description is primarily intended to facilitate understanding of the invention and is of course not restricted to the embodiments indicated, since other variants of it are also possible and conceivable within the protective scope of the claims set out below.

## Claims

1. A device pertaining to a vehicle (100) for estimating parameters relating to objects within a region (103) in front of the vehicle (100), wherein an object is a vehicle in front (105), which device comprises at least one sensor element (101), wherein said sensor element (101) is a camera fastened to the vehicle (100) to gather data (102) from said region in front (103) and send them to a calculation unit (104) which has a signal connection to a safety system situated in the vehicle (100), wherein said calculation unit (104) is adapted to calculating at least one parameter for the vehicle in front (105) within the region (103) and to sending an output signal based on that calculation to one or more safety systems of the vehicle (100) when any of the parameters exceeds a predetermined limit value, wherein one or more of the safety systems of the vehicle (100) are activated upon detection of skidding of the vehicle in front (105), **characterised in that** said at least one parameter is at least one of the parameters angular velocity and angular acceleration and that the calculation unit (104) is adapted to detect the occurrence of skidding of the vehicle in front (105) if said sensor element (101) registers its brake lamp lighting up without any brake action by the vehicle in front (105) being registered by the calculation unit (104).

2. A device according to claim 1, **characterised in that** one or more of the safety systems of the vehicle (100) are activated upon detection of evasive action by the vehicle in front (105).

3. A device according to claim 1 or 2, **characterised in that** the calculation unit (104) is adapted to estimating a friction coefficient between the vehicle in front (105) and the carriageway upon detection of skidding of that vehicle.

4. A method pertaining to a vehicle (100) for estimating parameters relating to objects in front, wherein an object is a vehicle in front (105), which method comprises the steps of
- registering data (102) by means of at least one sensor element (101) from a region (103) in front of the vehicle (100), wherein said sensor element (101) is a camera
- conveying these data (102) to a calculation unit (104),
- calculating at least one parameter for said vehicle in front (105) within the region (103),
- sending an output signal containing the calculated parameters to one or more safety systems of the vehicle (100) when any of the parameters exceeds a predetermined limit value,
- activating one or more of the safety systems of the vehicle (100) upon detection of skidding of the vehicle in front (105)
**characterised in that** said at least one parameter is at least one of the parameters angular velocity and angular acceleration
and by the further step of
- the calculation unit (104) detecting the occurrence of skidding of the vehicle in front (105) if the sensor element (101) registers its brake lamp lighting up without any brake action by the vehicle in front being registered by the calculation unit (104).

5. A method according to claim 4, **characterised by** the further step of
- one or more of the safety systems of the vehicle (100) being activated upon detection of evasive action by the vehicle in front (105).

6. A method according to claim 4 or 5, **characterised by** the further step of
- the calculation unit (104) estimating a friction coefficient between the vehicle in front (105) and the carriageway upon detection of skidding of that vehicle.

## Patentansprüche

1. Vorrichtung für ein Fahrzeug (100) zum Abschätzen von Parametern mit Bezug auf Objekte innerhalb eines Bereichs (103) vor dem Fahrzeug (100), wobei ein Objekt ein sich vor dem Fahrzeug befindliches Fahrzeug (105) ist, wobei die Vorrichtung mindestens ein Sensorelement (101) umfasst, wobei das Sensorelement (101) eine Kamera ist, die am Fahrzeug (100) befestigt ist, um Daten (102) vom vorausliegenden Bereich (103) zu sammeln und diese an eine Recheneinheit (104) zu senden, die eine Signalverbindung mit einem im Fahrzeug (100) befindlichen Sicherheitssystem aufweist, wobei die Recheneinheit (104) angepasst ist, mindestens einen Parameter für das vorausliegende Fahrzeug (105) innerhalb des Bereichs (103) zu berechnen und ein Ausgangssignal auf Basis dieser Berechnung an ein oder mehrere Sicherheitssysteme des Fahrzeugs (100) zu senden, wenn irgendeiner der Parameter einen vorbestimmten Grenzwert überschreitet, wobei ein oder mehrere der Sicherheitssysteme des Fahrzeugs (100) nach Erkennung von Schleudern des vorausliegenden Fahrzeugs (105) aktiviert werden, **dadurch gekennzeichnet, dass** der mindestens eine Parameter mindestens einer der Parameter Winkelgeschwindigkeit und Winkelbeschleunigung ist und dass die Recheneinheit (104) angepasst ist, das Auftreten von Schleudern des vorausliegenden Fahrzeugs (105) zu erkennen, falls das Sensorelement (101) erfasst, dass seine Bremsleuchte aufleuchtet, ohne dass eine Bremswirkung durch das vorausliegende Fahrzeug (105) von der Recheneinheit (104) erfasst wird.

2. Vorrichtung nach Anspruch 1, **dadurch gekennzeichnet, dass** eines oder mehrere der Sicherheitssysteme des Fahrzeugs (100) nach Erkennung einer Ausweichbewegung durch das vorausliegende Fahrzeug (105) aktiviert werden.

3. Vorrichtung nach Anspruch 1 oder 2, **dadurch gekennzeichnet, dass** die Recheneinheit (104) angepasst ist, nach Erkennung von Schleudern des vorausliegenden Fahrzeugs (105) einen Reibungskoeffizienten zwischen diesem Fahrzeug und der Fahrbahn abzuschätzen.

4. Verfahren, ein Fahrzeug (100) betreffend, zum Abschätzen von Parametern mit Bezug auf vorausliegende Objekte, wobei ein Objekt ein vorausliegendes Fahrzeug (105) ist, wobei das Verfahren die Schritte umfasst zum
- Registrieren von Daten (102) mittels mindestens eines Sensorelements (101) von einem Bereich (103) vor dem Fahrzeug (100), wobei das Sensorelement (101) eine Kamera ist,
- Übermitteln dieser Daten (102) an eine Recheneinheit (104),
- Berechnen mindestens eines Parameters für das vorausliegende Fahrzeug (105) innerhalb des Bereichs (103),
- Senden eines Ausgangssignals, das die berechneten Parameter beinhaltet, an ein oder mehrere Sicherheitssysteme des Fahrzeugs (100), wenn irgendeiner der Parameter einen vorbestimmten Grenzwert überschreitet,
- Aktivieren eines oder mehrerer der Sicherheitssysteme des Fahrzeugs (100) nach Erkennung von Schleudern des vorne befindlichen Fahrzeugs (105),
**dadurch gekennzeichnet, dass** mindestens ein Parameter mindestens einer der Parameter Winkelgeschwindigkeit und Winkelbeschleunigung ist und durch den weiteren Schritt zum
- Erkennen des Auftretens von Schleudern des vorausliegenden Fahrzeugs (105) durch die Recheneinheit (104), falls das Sensorelement (101) erfasst, dass seine Bremsleuchte aufleuchtet, ohne dass eine Bremswirkung durch das vorausliegende Fahrzeug von der Recheneinheit (104) erfasst wird.

5. Verfahren nach Anspruch 4, **gekennzeichnet durch** den weiteren Schritt zum
- Aktivieren eines oder mehrerer der Sicherheitssysteme des Fahrzeugs (100) nach Erkennung von Schleudern des vorausliegenden Fahrzeugs (105).

6. Verfahren nach Anspruch 4 oder 5, **gekennzeichnet durch** den weiteren Schritt zum
- Abschätzen eines Reibungskoeffizienten zwischen dem vorausliegenden Fahrzeug (105) und der Fahrbahn durch die Recheneinheit (104) nach Erkennung von Schleudern dieses Fahrzeugs.

## Revendications

1. Dispositif relatif à un véhicule (100) pour estimer des paramètres relatifs à des objets situés dans une zone (103) devant le véhicule (100), un objet étant un véhicule situé devant (105), le dispositif comprenant au moins un élément capteur (101), où l'élément capteur (101) est une caméra fixée au véhicule (100) pour collecter des données (102) de la zone devant (103) et les envoyer à une unité de calcul (104) qui comporte une connexion par signal à un système de sécurité situé dans le véhicule (100), l'unité de calcul (104) étant adaptée pour calculer au moins un paramètre relatif au véhicule devant (105) dans la zone (103) et pour envoyer un signal de sortie basé sur le calcul à un ou davantage de systèmes de sécurité du véhicule (100), lorsque l'un quelconque des paramètres dépasse une valeur limite prédéterminée, un ou plus des systèmes de sécurité du véhicule (100) étant activé à la suite de la détection d'un dérapage du véhicule devant (105), **caractérisé en ce que** ledit au moins un paramètre est au moins un parmi les paramètres vitesse angulaire et accélération angulaire et **en ce que** l'unité de calcul (104) est adaptée pour détecter le fait d'un dérapage du véhicule devant (105), lorsque l'élément capteur (101) enregistre que son feu de frein s'allume sans qu'aucune action de freinage par le véhicule devant (105) ne soit enregistrée par l'unité de calcul (104).

2. Dispositif selon la revendication 1, **caractérisé en ce qu'**un ou davantage des systèmes de sécurité du véhicule (100) sont activés à la suite de la détection d'une action d'évitement du véhicule devant (105).

3. Dispositif selon la revendication 1 ou 2, **caractérisé en ce que** l'unité de calcul (104) est adaptée pour estimer un coefficient de friction entre le véhicule devant (105) et la chaussée à la suite de la détection d'un dérapage de ce véhicule.

4. Procédé relatif à un véhicule (100) pour estimer des paramètres relatifs à des objets situés devant, un objet étant un véhicule situé devant (105), le procédé comprenant les étapes de
- enregistrer des données (102), à l'aide d'au moins un élément capteur (101), provenant d'une zone (103) devant le véhicule (100), où l'élément capteur (101) est une caméra,
- envoyer ces données (102) à une unité de calcul (104),
- calculer au moins un paramètre relatif au véhicule devant (105) dans la zone (103),
- envoyer un signal de sortie contenant le paramètre calculé à un ou davantage de systèmes de sécurité du véhicule (100), lorsque l'un quelconque des paramètres dépasse une valeur limite prédéterminée,
- activer un ou plus des systèmes de sécurité du véhicule (100) à la suite de la détection d'un dérapage du véhicule devant (105), **caractérisé en ce que** ledit au moins un paramètre est au moins un parmi les paramètres vitesse angulaire et accélération angulaire et par l'étape supplémentaire que
- l'unité de calcul (104) détecte le fait d'un dérapage du véhicule devant (105), lorsque l'élément capteur (101) enregistre que son feu de frein s'allume sans qu'aucune action de freinage par le véhicule devant (105) ne soit enregistrée par l'unité de calcul (104).

5. Procédé selon la revendication 4, **caractérisé par** l'étape supplémentaire que
- un ou davantage des systèmes de sécurité du véhicule (100) sont activés à la suite de la détection d'une action d'évitement du véhicule devant (105).

6. Procédé selon la revendication 4 ou 5, **caractérisé par** l'étape supplémentaire que
- l'unité de calcul (104) estime un coefficient de friction entre le véhicule devant (105) et la chaussée à la suite de la détection d'un dérapage de ce véhicule.
